# EUROPÄISCHE PATENTSCHRIFT

(11) **EP 3 793 761 B1**
(45) Veröffentlichungstag und Bekanntmachung des Hinweises auf die Patenterteilung: **23.09.2026**
(21) Anmeldenummer: 20712832.3
(22) Anmeldetag: 30.01.2020
(51) Int. Cl.: B23K 11/36, B23K 11/30, F04B 9/125, F04B 49/10, F04B 49/14

(54) **VORRICHTUNG ZUR KÜHLWASSERABSAUGUNG FÜR EINE ROBOTERINSTALLATIONSPLATTE MIT EINSTELLBAREM ABSAUGVOLUMEN**
APPARATUS FOR COOLING-WATER EXTRACTION FOR A ROBOT INSTALLATION PLATE, HAVING AN ADJUSTABLE EXTRACTION VOLUME
DISPOSITIF POUR L'ASPIRATION D'EAU DE REFROIDISSEMENT POUR UNE PLAQUE D'INSTALLATION ROBOTISÉE À VOLUME D'ASPIRATION RÉGLABLE

(30) Priorität: 28.02.2019 DE 102019202765; 27.03.2019 DE 102019204208
(43) Veröffentlichungstag der Anmeldung: 24.03.2021
(73) Patentinhaber: Guenther, Christian, 74078 Heilbronn (DE)
(72) Erfinder: Guenther, Christian, 74078 Heilbronn (DE)
(74) Vertreter: Ullrich & Naumann PartG mbB
(86) Internationale Anmeldenummer: PCT/DE2020/200010
(87) Internationale Veröffentlichungsnummer: WO 2020/173528

(56) Entgegenhaltungen:
- EP-A1- 0 112 131
- EP-A1- 2 025 443
- DE-C1- 3 306 420
- DE-U1- 202011 052 171
- KR-A- 20030 044 152
- US-A1- 2006 175 379

## Beschreibung

Die Erfindung betrifft eine Vorrichtung zur Kühlwasserabsaugung für eine Roboterinstallationsplatte mit einstellbarem Absaugvolumen entsprechend dem Oberbegriff des Anspruchs 1, siehe z.B. DE 33 06 420 C1.

Aus der Praxis ist es bislang bereits bekannt gewesen, zur Kühlwasserabsaugung im Rahmen sogenannter Roboterinstallationsplatten, beispielsweise im Rahmen der Kühlung von Schweißkappen einer Schweißvorrichtung, Absaugzylinder im Vorlauf und/oder Rücklauf einzusetzen. Zum diesbezüglichen Stand der Technik sei auf die EP 1 688 205 B1 verwiesen.

Aus Kostengründen und auch aus Gründen einer stets abgestrebten Reduzierung des Bauraums werden solche Absaugzylinder gerade so dimensioniert, dass sie zum Absaugen eines bestimmten Volumens an Kühlflüssigkeit bzw. Wasser geeignet sind. Wenn das Volumen erhöht werden soll, machen entsprechende Vorrichtungen Probleme bzw. reicht das absaugbare Volumen nicht aus.

Der vorliegenden Erfindung liegt daher die Aufgabe zugrunde, die in der Praxis auftretenden Probleme zu beseitigen. Dies gelingt durch eine ganz besondere technische bzw. maschinenbauliche Maßnahme gemäß Anspruch 1. Danach ist bei einer gattungsbildenden Vorrichtung das Absaugvolumen variabel, d.h. einstellbar ist. Dies wird durch einen hinreichend großen Absaugzylinder erreicht, der ein maximales Absaugvolumen in Bezug auf die konkrete Anwendung hat. Durch eine mechanische Hubbegrenzung des im Absaugzylinder befindlichen Kolbens lässt sich das Absaugvolumen auf das grade notwendige Maß einstellen.

Daraus ergeben sich verschiedene Vorteile, nämlich eine Flexibilität in der Verkleinerung oder Vergrößerung des Absaugvolumens, ohne den Absaugzylinder austauschen zu müssen.

Das Volumen des Zylinders kann durch die Hubbegrenzung auf unterschiedliche Anlagenanforderungen (beispielsweise Kühlwasserdruck im Vorlauf und Rücklauf, Schlauchlängen, etc.) eingestellt werden. Somit wird beim Absaugen zumindest ein Druckausgleich auf 0 bar bzw. im Idealfall ein Rückhaltevakuum erzeugt.

Die Einstellung des Absaugvolumens erfolgt über die Hubbegrenzung des Zylinders durch einen Anschlag. Dieser kann sowohl auf der Druckluftseite (beispielsweise am Zylinderboden) oder auf Wasserseite der Zylinder-Kolben-Anordnung angebracht sein. Andere Begrenzungen, beispielsweise eine Verschiebung des Kolbenbodens oder von der Seite her wirkende Begrenzungen sind denkbar.

Der Anschlag kann mechanisch ausgebildet sein, beispielsweise durch eine Verstellschraube, oder aber auch pneumatisch, fluidtechnisch oder elektrisch, beispielsweise durch eine Zylinder-Kolben-Anordnung mit Abfragen des Vorlaufdrucks und automatischer Einregulierung entsprechend dem Vorlaufdruck.

Entsprechend der Erfindung ist das Volumen über den Zylinderhub einzustellen, wobei der Zylinder das Vakuum bzw. den Druckausgleich erzeugt. Entsprechend der Erfindung dient ein vorzugsweise mechanischer Unterdruckmanometer oder ein Druckschalter bzw. ein elektrischer Drucksensor zur Überwachung und einer Einstellung.

Der Aussaugzylinder kann sowohl pneumatisch per Druckluft, fluidtechnisch, hydraulisch bzw. wasserhydraulisch oder elektrisch betrieben werden.

Ein weiterer Vorteil besteht darin, dass der Absaugzylinder auch dann funktioniert, wenn der Luftdruck niedriger ist als der Wasserdruck im System.

Zur Realisierung gibt es zwei zu bevorzugende Möglichkeiten.

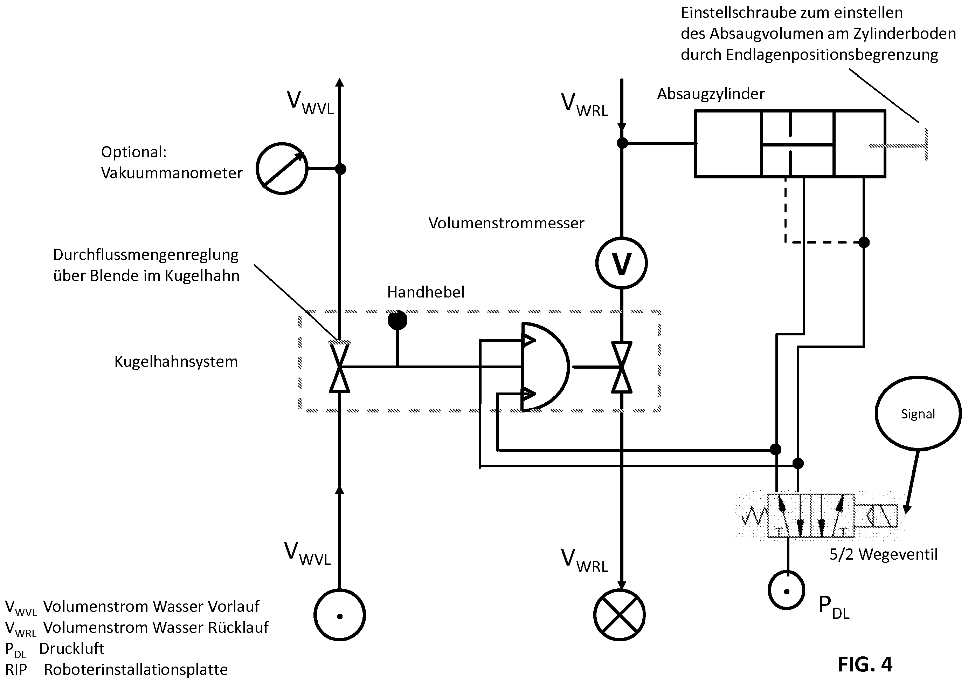

Zum einen lässt sich die Druckerhöhung der pneumatischen "Seite" durch eine weitere Druckbeaufschlagung der unteren Kolbenseite des Wasserkolbens mit Druckluft erzeugen, wie dies in Figur 4 gezeigt ist. Dies entspricht einer Flächenvergrößerung.

Eine weitere Möglichkeit ergibt sich dadurch, dass die Druckerhöhung durch einen Differenzkolben (Flächenvergrößerung des Luftkolbens) oder durch einen Tandemzylinder (zwei oder mehrere Luftkolben) generiert wird. Daraus ergibt sich eine Flächenvergrößerung der Luftseite.

Kugelhähne und Absaugzylinder können pneumatisch verzögert über ein 5/2-Wegeventil angesteuert werden, wobei hierbei durch eine mechanische Drossel gewährleistet wird, dass das Kugelhahnsystem zuerst geschlossen ist, bevor der Absaugzylinder in Bewegung gesetzt wird.

Diese Zeitversetzung kann auch durch pneumatische oder elektrische Endschalter bzw. Zeitverzögerungsventile erreicht werden.

Zum anderen ist es denkbar, dass zwei separate pneumatische Ventile über eine Anlagensteuerung zeitverzögert angesteuert werden.

Zudem können zwei separate 2/2-Wegeventile im Vor- und Rücklauf platziert werden, es muss kein Kugelhahnsystem sein, diese Ventile können sowohl elektrisch als auch pneumatisch betrieben werden.

Außerdem kann das Wegeventil im Rücklauf auch durch ein Rückschlagventil ersetzt werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgenden Figuren nebst darin enthaltener Beschreibung zu verweisen. In der Zeichnung zeigen
- Fig. 1: in einer schematischen Ansicht eine beschaltete Roboterinstallationsplatte mit Kühlwasservorlauf und Kühlwasserrücklauf gemäß Stand der Technik,
- Fig. 2: in einer schematischen Ansicht eine beschaltete Roboterinstallationsplatte gemäß Stand der Technik, wobei der Wasservorlauf und Wasserrücklauf sowie die Druckluftbeaufschlagung angedeutet ist,
- Fig. 3: in einer schematischen Ansicht ein erstes Ausführungsbeispiel einer erfindungsgemäß beschalteten Roboterinstallationsplatte mit Kühlwasservorlauf und Kühlwasserrücklauf nebst Druckluftbeaufschlagung, wobei ein Absaugzylinder mit Endlagenpositionsbegrenzung vorgesehen ist und ein vor dem Kugelhahnsystem angeordnete Durchflussmengenbegrenzer vorgesehen ist,
- Fig. 4: in einer schematischen Ansicht ein zweites Ausführungsbeispiel einer erfindungsgemäß beschalteten Roboterinstallationsplatte mit Kühlwasservorlauf und Kühlwasserrücklauf nebst Druckluftbeaufschlagung, wobei ein Absaugzylinder mit Endlagenpositionsbegrenzung vorgesehen ist und ein vor dem Kugelhahnsystem angeordnete Durchflussmengenbegrenzer vorgesehen ist, wobei die Durchflussmengenregelung dem Kugelhahnsystem zugeordnet ist,
- Fig. 5: in einer schematischen Ansicht im Konkreten die die Durchflussmengenregelung betreffende Anordnung aus Figur 4 mit der Kombination aus pneumatischem Drehantrieb und Einstellschraube zum Einstellen der Endlage in der "Auf"-Position,
- Fig. 6: in schematischen Ansichten - links Symbol-Darstellung und rechts Schnitt-Darstellung die Durchflussmengenregelung gemäß den Figuren 4 und 5, wobei eine Regelblende gleichzeitig auch als Dichtung dient,
- Fig. 7: in schematischen Ansichten den Regelbereich des Kugelhahns aus den Figuren 4 und 5, jeweils ohne Blende und mit Regelblende, wobei der Regelbereich nach rechts verschoben wird, und
- Fig. 8: in einer schematischen Ansicht die grundsätzliche Anordnung einer eines Absaugzylinders mit Endlagenpositionsbegrenzung mit optionaler Druck-/Kraftverstärkung durch pneumatische Druckbeaufschlagung des Wasserkolbens auf der Unterseite.

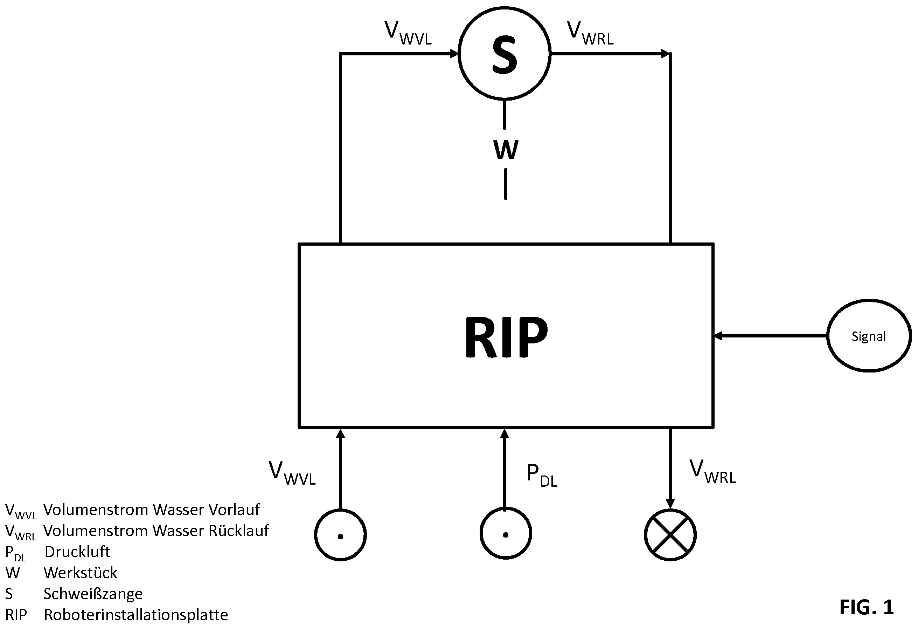

Die Figuren 1 bis 8 sind mit einer beschreibenden Beschriftung ausgestattet, so dass sich insoweit detaillierte Ausführungen dazu erübrigen. Ergänzend zu der Beschriftung sei Folgendes ausgeführt:

Figur 1 zeigt eine beschaltete Roboterinstallationsplatte (RIP) mit Kühlwasservorlauf und Kühlwasserrücklauf, wie sie aus der Praxis hinlänglich bekannt ist. Aufgabe der RIP ist eine Prozessüberwachung, nämlich die Überwachung des Kühlwassers. Außerdem dient die RIP zur Einregelung der maximal benötigten Wassermenge. Es findet ein hydraulischer Abgleich des Gesamtsystems statt. Des Weiteren dient die RIP zum Erzeugen eines Vakuums bzw. zum Druckausgleich bei einer ganz besonderen Anwendung, nämlich beim Schweißkappenwechsel einer Schweißvorrichtung. Dadurch soll ein ungewollter Kühlwasseraustritt vermieden, zumindest aber in ganz erheblichen Umfange reduziert werden.

Die Vermeidung von Kühlwasseraustritt reduziert die Verletzungsgefahr durch Spritzwasser/Wasserpfützen in der Umgebung, vermeidet nämlich eine Rutschgefahr. Außerdem lässt sich durch die Vermeidung des Austritts von Kühlwasser eine Korrosion an Karosserieteilen durch Kühlwasser wirksam vermeiden. Auch findet im Bereich benachbarter Geräte, beispielsweise in der Produktionslinie/Zelle, keine Korrosion statt, zum Beispiel bei sogenannten Kappenwechslern.

Schließlich dient die RIP zum Schließen des Vor- und Rücklaufs bei Wartungsarbeiten, beispielsweise im Falle eines Schweißkappenverlusts durch Roboterbewegung und Schlauchplatzer. Gleiches gilt für den Schweißkappenwechsel, der bei entsprechender Ansteuerung möglich ist.

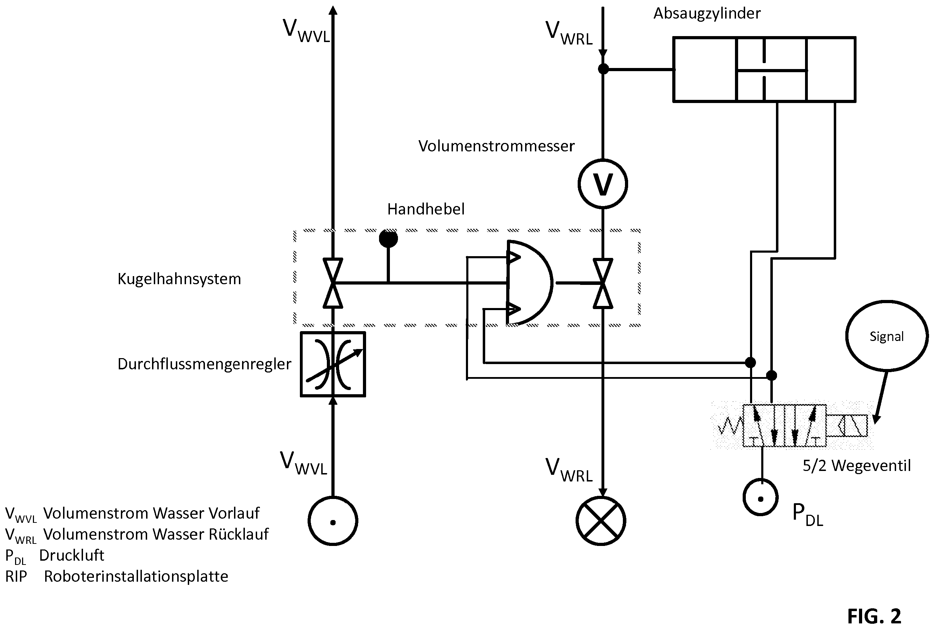

Figur 2 zeigt in schematischer Ansicht eine beschaltete Roboterinstallationsplatte, ebenfalls gemäß Stand der Technik, wobei der Wasservorlauf und Wasserrücklauf sowie die Druckluftbeaufschlagung eingezeichnet ist.

Ein Kugelhahnsystem dient zum Schließen von Vor- und Rücklauf. Eine manuelle Betätigung ist durch einen Handhebel möglich, beispielsweise im Rahmen von Wartungsarbeiten.

Grundsätzlich kann das Schließen von Vor- und Rücklauf automatisch erfolgen, nämlich vorzugsweise pneumatisch, beispielsweise beim Schweißkappenverlust durch Roboterbewegung oder Schlauchplatzer. Das Schließen von Vor- und Rücklauf ist zum Schweißkappenwechsel sowie bei weiteren Prozessproblemen erforderlich.

Ein Durchflussmengenregler dient zum hydraulischen Abgleich des Gesamtsystems, wobei mehrere RIPs bzw. Schweißroboter in einem Anlagenbereich kombiniert sein können.

In Figur 2 ist des Weiteren ein Volumenstrommesser angedeutet, der zur Überwachung des Kühlwassers bzw. zur Prozessüberwachung dient.

Ein Absaugzylinder erzeugt ein Vakuum und sorgt somit für den Druckausgleich durch eine Volumenvergrößerung aufgrund einer Bewegung des Kolbens.

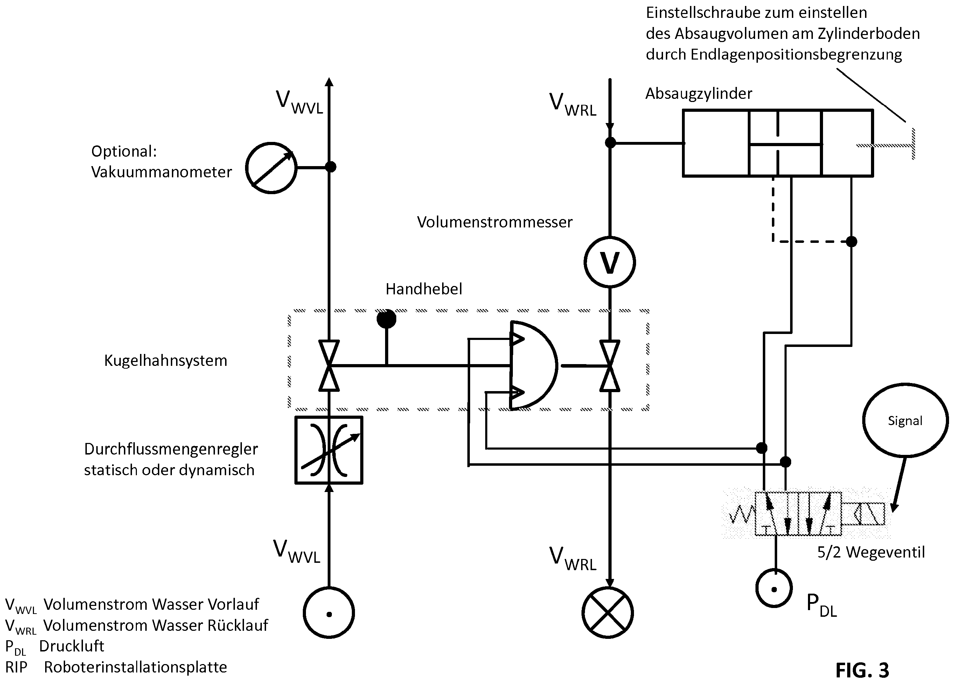

Figur 3 zeigt ein erstes Ausführungsbeispiel einer erfindungsgemäß beschalteten Roboterinstallationsplatte. Im Detail ist dort die Kombination eines Vakuummanometers und eines einstellbaren Absaugzylinders vorgesehen, wobei die Einstellung des Absaugzylinders per Einstellschraube zum Einstellen des Absaugvolumens am Zylinderboden durch Endlagenpositionsbegrenzung dient. Die konkrete Ausführung mittels Einstellschraube ist hier lediglich beispielhaft genannt.

Der einstellbare Absaugzylinder hat den Vorteil, dass sich das Absaugvolumen des Zylinders exakt vorgeben lässt.

Ein zu großes Absaugvolumen generiert zu viel Luft im System nach dem Schweißkappenwechsel. Dies wiederum führt zu einer verschlechterten Kühlung.

Ein zu kleines Absaugvolumen führt zum Austritt von Kühlwasser, wodurch eine Verletzungsgefahr durch Wasserpfützen im Umfeld und somit eine Rutschgefahr unvermeidlich ist. Außerdem lässt sich nicht ausschließen, dass Karosserieteile aufgrund des Kühlwassers korrodieren.

Die Korrosion anderer Gerätschaften in der Umgebung, nämlich in der Produktionslinie/Zelle, beispielsweise beim oder im Bereich des Kappenwechslers, sind unumgänglich.

Eine dynamische Durchflussmengenregelung ist möglich, wobei hierdurch ein hydraulischer Abgleich des Gesamtsystems (mehrere RIPs bzw. Schweißroboter in einem Anlagenbereich) unabhängig von Prozessänderungen durchgeführt wird, insbesondere dann, wenn Schweißzangen zu- oder abgeschaltet werden oder wenn eine Änderung der Pumpenleistung des Kühlkreislaufs, gewollt oder ungewollt, stattfindet. Der hydraulische Abgleich ist somit unabhängig von Prozessänderungen.

Figur 4 zeigt ein weiteres Ausführungsbeispiel einer erfindungsgemäß beschalteten Roboterinstallationsplatte, wobei dem Kugelhahn die Durchflussmengenregelung zugeordnet ist. Ein separater Durchflussmengenregler ist in diesem Fall nicht erforderlich.

Im Konkreten ist dem Kugelhahn eine charakteristische Regelblende zugeordnet, über die sich der Volumenstrom regeln lässt. Aufgrund der hier realisierten Funktionsintegration - Blende im Kugelhahn - lassen sich die Bauteile und lässt sich somit der Bauraum reduzieren.

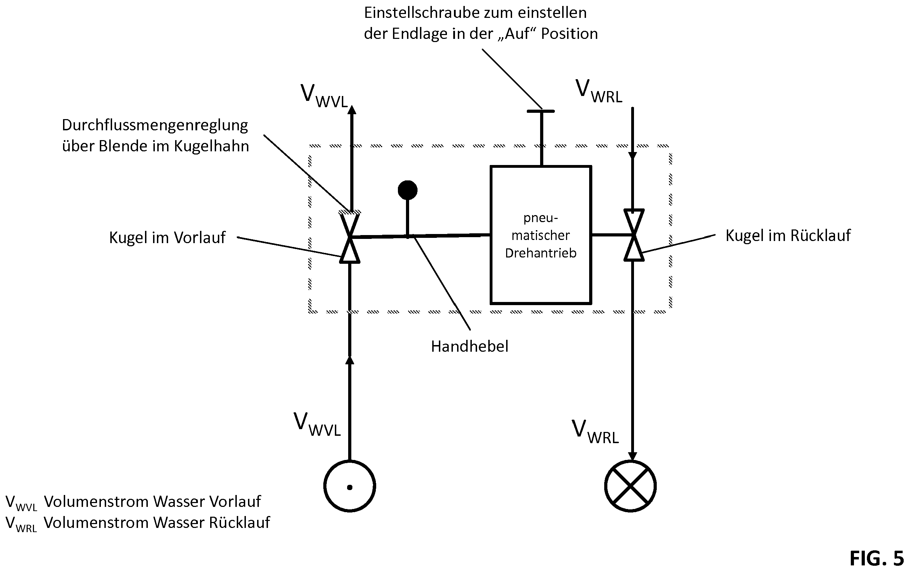

Figur 5 zeigt in einer schematischen Ansicht die Durchflussmengenregelung entsprechend der Beschreibung zu Figur 4.

Zusätzlich ist bei einem pneumatischen Drehantrieb eine Einstellschraube vorgesehen, wonach ein genaues Einstellen des Volumenstroms durch die Veränderungen des Endanschlags des Kugelhahnsystems durch die Regelschraube möglich ist. Durch die Steigung der Regelschraube lässt sich der Volumenstrom durch das Kugelhahnsystem bzw. die dort integrierte Regelblende mit hoher Genauigkeit einstellen, vorzugsweise auf 0,1 l/min.

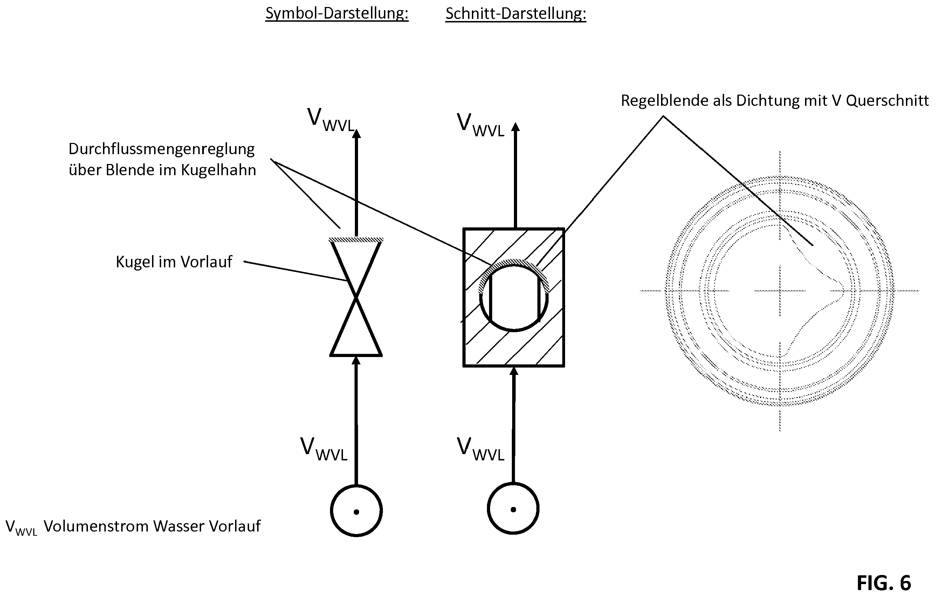

Figur 6 zeigt in schematischen Ansichten die Durchflussmengenregelung gemäß den Figuren 4 und 5 im Kugelhahn, wobei dem Kugelhahn eine Regelblende zugeordnet ist. Die Regelblende dient als Dichtung mit V-förmigem Querschnitt.

Die Regelblende hat eine besondere charakteristische Form, wodurch der Einstellbereich größer wird. Es lässt sich eine genauere und feinere Einstellung des Volumenstroms vornehmen.

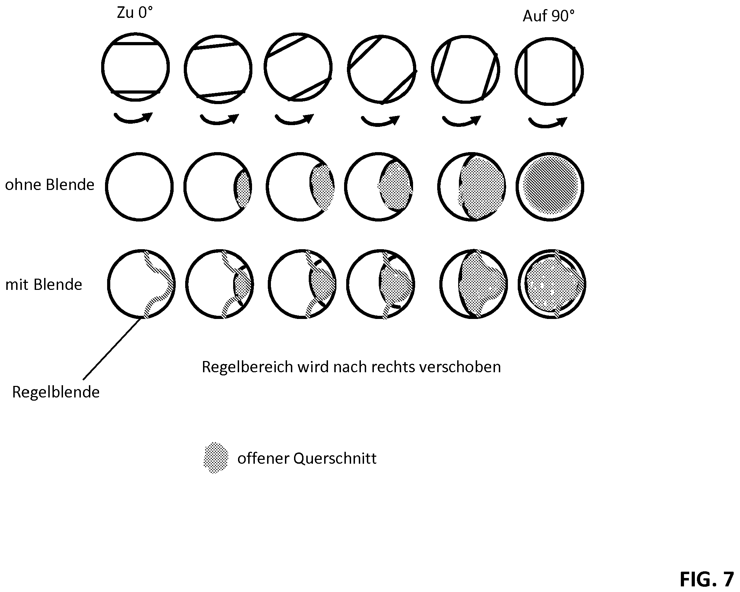

Figur 7 zeigt den Regelbereich des Kugelhahns mit Regelblende, wobei der Regelbereich nach rechts verschoben wird.

Durch die Regelblende findet eine Verschiebung des Regelbereichs nach rechts statt, wobei der offene Querschnitt mit Blende geringer ist als ohne Blende. Somit kann der Volumenstrom bei geringeren Strömungsgeschwindigkeiten genauer eingestellt werden. Der Regelbereich vergrößert sich dadurch.

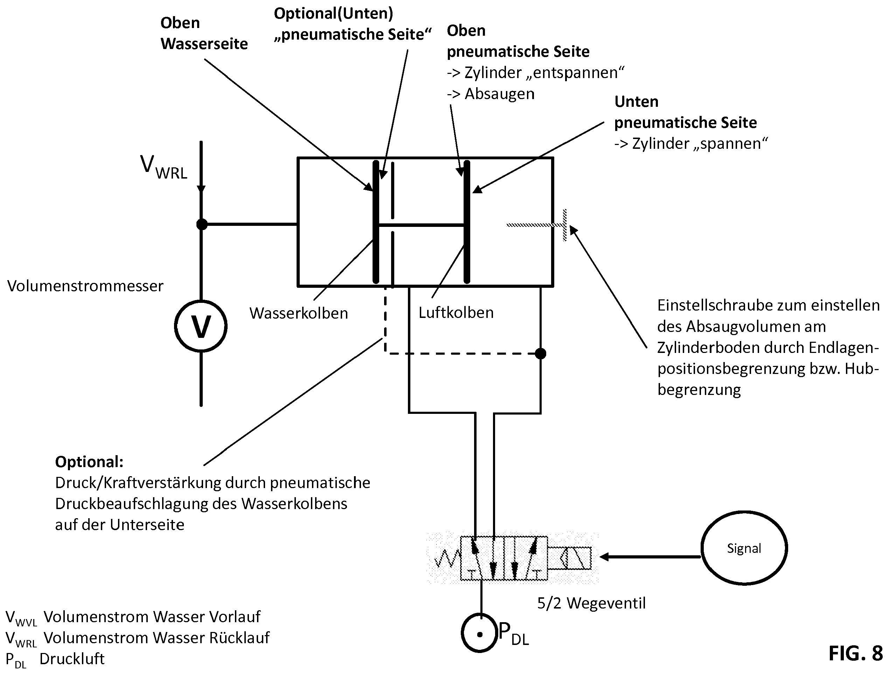

Figur 8 zeigt in schematischer Ansicht die grundsätzliche Anordnung eines Absaugzylinders mit Endlagenpositionsbegrenzung, wobei optional eine Druck-/Kraftverstärkung durch pneumatische Druckbeaufschlagung des Wasserkolbens auf der Unterseite realisiert ist.

Aufgrund einer "Vergrößerung" der Fläche des Kolbens funktioniert der Absaugzylinder auch dann, wenn der Rücklaufdruck des Kühlwassers über den Systemdruck der Druckluft steigt. Durch Vorkehrung der Einstellmöglichkeit im Absaugzylinder lässt sich ein variables Absaugvolumen realisieren.

## Patentansprüche

1. Vorrichtung zur Kühlwasserabsaugung für eine Roboterinstallationsplatte, wobei das Absaugvolumen einstellbar ist und
durch einen hinreichend großen Absaugzylinder erreicht wird, der ein maximalgroßes Absaugvolumen hat, wobei das Absaugvolumen durch eine mechanische Hubbegrenzung des im Absaugzylinder befindlichen Kolbens generiert wird und wobei
die mechanische Hubbegrenzung durch eine Einstellschraube am/im Absaugzylinder realisiert wird, die im Bereich des Zylinderbodens oder aber auch im Bereich der Zylinderwand angeordnet ist, wodurch eine Endlagenpositionsbegrenzung bzw. Hubbegrenzung des Kolbens per Anschlag erreicht wird,
**dadurch gekennzeichnet, dass**
die Vorrichtung ein mechanisches Unterdruckmanometer, ein Druckschalter bzw. einen elektrischen Drucksensor zur Überwachung und Einstellung aufweist, so dass der Zylinderhub mittels der Einstellschraube basierend auf einem Drucksensor eingestellt wird.

2. Vorrichtung nach Anspruch 1, **dadurch gekennzeichnet, dass** das die mechanische Hubbegrenzung im Sinne einer Hubveränderung dadurch realisiert wird, dass der Zylinderboden gegenüber dem Hubkolben verlagert bzw. verschoben wird.

3. Vorrichtung nach Anspruch 1 oder 2, **dadurch gekennzeichnet, dass** eine Druck-/Kraftverstärkung im Absaugzylinder durch pneumatische Druckbeaufschlagung des Wasserkolbens, vorzugsweise auf der Unterseite, erfolgt.

4. Vorrichtung nach Anspruch 3, **dadurch gekennzeichnet, dass** der Absaugzylinder sowohl pneumatisch mit Druckluft, fluidtechnisch, hydraulisch oder wasserhydraulisch oder elektrisch betreibbar ist.

5. Vorrichtung nach einem das Ansprüche 1 bis 4, **dadurch gekennzeichnet, dass** eine Druckerhöhung durch einen Differenzkolben (Flächenvergrößerung des Luftkolbens) oder durch einen Tandemzylinder (zwei oder mehrere Luftkolben) erfolgt.

6. Vorrichtung nach einem der Ansprüche 1 bis 5, wobei die Vorrichtung einen Kühlwasservorlauf und einen Kühlwasserrücklauf umfasst, **dadurch gekennzeichnet, dass** im Kühlwasservorlauf und/oder im Kühlwasserrücklauf ein vorzugsweise statischer Durchflussmengenregler vorgesehen ist, der in einem Kugelhahnsystem angeordnet sein kann.

7. Vorrichtung nach Anspruch 6, **dadurch gekennzeichnet, dass** zur Durchflussmengenregelung dem Kugelhahn eine Regelblende zur Beeinflussung des Volumenstroms zugeordnet ist.

## Claims

1. An apparatus for cooling-water extraction for a robot installation plate, wherein the apparatus has an adjustable extraction volume, wherein the extraction volume is achieved by a sufficiently large extraction cylinder that has a maximum extraction volume, wherein the extraction volume is adjusted by a mechanical stroke limit of a piston located in the extraction cylinder, and wherein the mechanical stroke limit is realized by an adjustment screw that is on or in the extraction cylinder, wherein the extraction cylinder has a cylinder bottom and a cylinder wall and the adjustment screw is arrangeable in a region of the cylinder bottom or in a region of the cylinder wall, whereby an end position limit or stroke limit of the piston is achieved by a stop,
**characterized in that** the apparatus comprises a mechanical vacuum gauge, a pressure switch or an electrical pressure sensor for monitoring and adjustment, so that the cylinder stroke is adjusted by means of the adjusting screw based on a pressure sensor.

2. The apparatus according to claim 1, **characterized in that** the mechanical stroke limit in the sense of a stroke change is realized **in that** the cylinder bottom is shifted or displaced in relation to the piston.

3. The apparatus according to claim 1 or 2, **characterized in that** a pressure/force amplification in the extraction cylinder takes place by applying pneumatic pressure to an underside of the piston.

4. The apparatus according to claim 3, **characterized in that** the extraction cylinder is operable pneumatically by compressed air, fluidically, hydraulically, or water-hydraulically, or electrically.

5. The apparatus according to one of claim 1 to 4, **characterized in that** the piston is an air piston and the apparatus further includes a differential piston, wherein a pressure increase takes place via the differential piston (area enlargement of the air piston) or via a tandem cylinder (two or more air pistons).

6. The apparatus according to one of claim 1 to 5, **characterized in that** the apparatus comprises a cooling-water supply line and a cooling-water return line, wherein a static flow regulator is provided in the cooling-water supply line and/or in the cooling-water return line and is arrangeable in a ball valve system.

7. The apparatus according to claim 6, **characterized in that** for flow regulation, the ball valve system includes a control diaphragm for influencing a volumetric flow rate.

## Revendications

1. Dispositif d'aspiration d'eau de refroidissement destiné à une plaque de montage de robot, dans lequel le volume d'aspiration est réglable et
est obtenu au moyen d'un cylindre d'aspiration de dimensions suffisantes présentant un volume d'aspiration maximal, le volume d'aspiration étant déterminé par une limitation mécanique de la course du piston situé dans le cylindre d'aspiration et
la limitation mécanique de la course est réalisée par une vis de réglage sur ou dans le cylindre d'aspiration, qui est disposée au niveau du fond ou de la paroi du cylindre, de manière à limiter la position de fin de course ou la course du piston par mise en butée,
**caractérisé en ce que**
le dispositif comporte un manomètre mécanique à dépression, un pressostat ou un capteur de pression électrique destiné à la surveillance et à la régulation, de sorte que la course du cylindre soit réglée au moyen de la vis de réglage sur la base du signal fourni par un capteur de pression.

2. Dispositif selon la revendication 1, **caractérisé en ce que** la limitation mécanique de la course, c'est-à-dire une modification de la course, est réalisée par le déplacement du fond du cylindre par rapport au piston.

3. Dispositif selon la revendication 1 ou 2, **caractérisé en ce qu'**une amplification de la pression/force dans le cylindre d'aspiration est réalisée par mise sous pression pneumatique du piston d'eau, de préférence sur sa face inférieure.

4. Dispositif selon la revendication 3, **caractérisé en ce que** le cylindre d'aspiration peut être actionné aussi bien de manière pneumatique avec de l'air comprimé, par entraînement fluidique, de manière hydraulique ou hydro-hydraulique, ou encore de manière électrique.

5. Dispositif selon l'une des revendications 1 à 4, **caractérisé en ce qu'**une augmentation de la pression est obtenue par un piston différentiel (surface accrue du piston pneumatique) ou par un cylindre en tandem (deux ou plusieurs pistons à air).

6. Dispositif selon l'une des revendications 1 à 5, dans lequel le dispositif comprend une conduite d'alimentation en eau de refroidissement et une conduite de retour d'eau de refroidissement, **caractérisé en ce qu'**un régulateur de débit, de préférence statique, est prévu dans la conduite d'alimentation en eau de refroidissement et/ou dans la conduite de retour d'eau de refroidissement, le régulateur de débit pouvant être disposé dans un système de robinets à boisseau sphérique.

7. Dispositif selon la revendication 6, **caractérisé en ce que**, pour la régulation du débit, un diaphragme de régulation destiné à influencer le débit volumique est affecté au robinet à boisseau sphérique.
